# EUROPEAN PATENT APPLICATION

(11) **EP 4 851 745 A1**
(43) Date of publication of application: **09.12.2026**
(21) Application number: 26172679.8
(22) Date of filing: 16.04.2026
(51) Int. Cl.: G05D 1/81, B64C 13/18

(54) **MOBILITY APPARATUS AND METHOD FOR CONTROLLING FLIGHT**

(30) Priority: 02.06.2025 KR 20250072013
(71) Applicant: Hyundai Motor Company, Seoul 06797 (KR); Kia Corporation, Seoul 06797 (KR)
(72) Inventor: LIM, Jun Young, 18280 Hwaseong-si, Gyeonggi-do (KR)
(74) Representative: Viering, Jentschura & Partner mbB Patent- und Rechtsanwälte

(57) **Abstract**

A mobility apparatus and method for controlling flight. The mobility apparatus includes a fuselage; at least one propulsor coupled to the fuselage; an actuator coupled with the fuselage and configured to control the at least one propulsor based on a flight parameter; a computer-readable memory storing instructions that, based on being executed by a processor, perform operations including: controlling the actuator according to an automatic piloting mode; activating a manual piloting mode based on an input of a pilot during flight of the mobility apparatus according to the automatic piloting mode; during a transition period between the automatic piloting mode and the manual piloting mode, generating a blend parameter based on (i) an automatic piloting parameter of the automatic piloting mode and (ii) a manual piloting parameter according to a piloting input of the pilot; and controlling the actuator based on the blend parameter during the transition period.

## Description

### CROSS-REFERENCE TO RELATED APPLICATION

Pursuant to 35 U.S.C. § 119(a), this application claims the benefit of an earlier filing date and right of priority to Korean Patent Application No. 10-2025-0072013, filed on June 2, 2025, the disclosure of which is incorporated herein by reference in its entirety.

### TECHNICAL FIELD

The present disclosure relates to a mobility apparatus and a flight control method.

### BACKGROUND

In recent years, aircraft have been developed for rapid movement of people and cargo in dense urban areas, short-distance sections, or the like. Aircraft that operate in urban areas typically are typically required to have low-noise properties and environmental friendliness compared to existing aircraft. Accordingly, various developments have been made in aviation systems for satisfying the above requirements. Aircraft using environmentally friendly energy mainly employ a powertrain system using an electric battery as an energy source.

### SUMMARY

According to one aspect of the present disclosure, there is provided a mobility apparatus including a fuselage; at least one propulsor coupled to the fuselage; an actuator coupled with the fuselage and configured to control the at least one propulsor based on a flight parameter; at least one processor; and at least one computer-readable memory storing instructions that, based on being executed by the at least one processor, perform operations including: controlling the actuator according to an automatic piloting mode; activating a manual piloting mode based on an input of a pilot during flight of the mobility apparatus according to the automatic piloting mode; during a transition period between the automatic piloting mode and the manual piloting mode, generating a blend parameter based on (i) an automatic piloting parameter of the automatic piloting mode and (ii) a manual piloting parameter according to a piloting input of the pilot; and controlling the actuator based on the blend parameter during the transition period.

For some implementations, the operations include generating the blend parameter to (i) gradually decrease an influence of the automatic piloting parameter on the blend parameter during the transition period and (ii) gradually increase an influence of the manual piloting parameter on the blend parameter during the transition period.

For some implementations, the operations include deactivating the automatic piloting mode according to the activating of the manual piloting mode; and generating the blend parameter based on (i) a last automatic piloting parameter identified upon the deactivating of the automatic piloting mode and (ii) an initial manual piloting parameter identified upon the activating of the manual piloting mode.

For some implementations, the operations include generating the blend parameter by (i) gradually decreasing a first weight value applied to the last automatic piloting parameter during the transition period, and (ii) gradually increasing a second weight value applied to the initial manual piloting parameter during the transition period.

For some implementations, a sum of the first weight value and the second weight value may have a constant value during the transition period.

For some implementations, the automatic piloting parameter may include flight control data associated with a thrust and an attitude applied to the actuator.

For some implementations, the operations include generating the automatic piloting parameter based on mission information according to flight path, surrounding environment, and flight mode in the automatic piloting mode; and controlling the actuator based on the automatic piloting parameter during the automatic piloting mode.

For some implementations, the mobility apparatus includes a mobility control operation device configured to receive the piloting input of the pilot and configured to switch between the automatic piloting mode and the manual piloting mode, and the operations include during the automatic piloting mode, controlling automatic movement of the mobility control operation device. The automatic movement of the mobility control operation device is controlled based on generating position data of the mobility control operation device corresponding to the automatic piloting parameter during the flight according to the automatic piloting mode.

For some implementations, the operations include releasing the controlling of the automatic movement of the mobility control operation device during the transition period, based on the activating of the manual piloting mode.

For some implementations, the operations include based on elapse of the transition period, controlling the actuator based on the manual piloting parameter according to the piloting input of the pilot, without influence from the automatic piloting parameter.

According to another aspect of the present disclosure, there is provided flight control method for a mobility apparatus including a fuselage, at least one propulsor, and an actuator configured to control the at least one propulsor, the flight control method including: controlling the actuator according to an automatic piloting mode; activating a manual piloting mode based on an input of a pilot during flight of the mobility apparatus according to the automatic piloting mode; during a transition period between the automatic piloting mode and the manual piloting mode, generating a blend parameter based on (i) an automatic piloting parameter of the automatic piloting mode and (ii) a manual piloting parameter according to a piloting input of the pilot; and controlling the actuator based on the blend parameter during the transition period.

The features briefly summarized above for this disclosure are only example aspects of the detailed description of the disclosure which follow, and are not intended to limit the scope of the disclosure.

### BRIEF DESCRIPTION OF THE DRAWINGS

FIG. 1 shows a schematic diagram illustrating examples of modules that can be implemented in various types of movable mobility apparatuses.
FIG. 2 shows a diagram illustrating an air mobility apparatus according to an example of the present disclosure.
FIG. 3 shows a diagram illustrating an air mobility apparatus implementing a hovering mode as an air mobility apparatus according to another example of the present disclosure.
FIG. 4 shows a diagram illustrating an example of an upper portion of an air mobility apparatus implementing a hovering mode.
FIG. 5 shows a diagram illustrating an air mobility apparatus implementing a cruising mode as an air mobility apparatus according to another example of the present disclosure.
FIG. 6 shows a schematic diagram illustrating an example of modules included in an air mobility apparatus according to an implementation of the present disclosure.
FIG. 7 shows a diagram illustrating an example of an air mobility apparatus according to an implementation of the present disclosure.
FIG. 8 shows a diagram illustrating an example of an operation device.
FIG. 9 shows a flowchart illustrating an example of a flight control method according to another implementation of the present disclosure.
FIG. 10 shows a diagram schematically illustrating an example of flight control according to control handover.

### DETAILED DESCRIPTION

Implementations of the present disclosure can provide a mobility apparatus that stably implements switching from automatic piloting to manual piloting to ensure flight safety and a flight control method.

An electric aircraft may be serviced by an urban aerial mobility (UAM) or an advanced aerial Mobility (AAM). The electric aircraft can be designed for automatic flight but can also implement manual control by a pilot in order to ensure minimum safety. For example, the automatic flight may be switched to manual flight by a request for a control handover of the pilot. However, when the control is switched to manual flight, there may be differences between an attitude control state in the automatic flight and an initial attitude control state requested in the manual flight. This can create difficulty for the pilot to perform flight control according to the control handover, which may affect flight safety.

Implementations of the present disclosure can provide a mobility apparatus and a flight control method that stably implements switching from automatic piloting to manual piloting to help ensure flight safety.

Hereinafter, example implementations of the present disclosure will be described in detail with reference to the accompanying drawings so that those skilled in the art may easily implement the present disclosure. However, the present disclosure may be implemented in various different ways, and is not limited to the implementations described therein.

In describing example implementations of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an implementation could be termed a second element in another implementation, and, similarly, a second element in an implementation could be termed a first element in another implementation, without departing from the scope of the present disclosure.

In the present disclosure, elements that are distinguished from each other are for clearly describing each feature, and do not necessarily mean that the elements are separated. That is, a plurality of elements may be integrated in one hardware or software unit, or one element may be distributed and formed in a plurality of hardware or software units. Therefore, even if not mentioned otherwise, such integrated or distributed implementations are included in the scope of the present disclosure.

In the present disclosure, elements described in various implementations do not necessarily mean essential elements, and some of them may be optional elements. Therefore, an implementation composed of a subset of elements described in an implementation is also included in the scope of the present disclosure. In addition, implementations including other elements in addition to the elements described in the various implementations are also included in the scope of the present disclosure.

The advantages and features of the present disclosure and the way of attaining them will become apparent with reference to implementations described below in detail in conjunction with the accompanying drawings. Implementations, however, may be embodied in many different forms and should not be constructed as being limited to example implementations set forth herein. Rather, these implementations are provided so that this disclosure will be complete and will fully convey the scope of the disclosure to those skilled in the art.

In the present disclosure, each of phrases such as "A or B", "at least one of A and B", "at least one of A or B", "A, B or C", "at least one of A, B and C", ""at Each of the phrases such as "at least one of A, B or C" and "at least one of A, B, C or combination thereof" may include any one or all possible combinations of the items listed together in the corresponding one of the phrases .

In the present disclosure, expressions of location relations used in the present specification such as "upper", "lower", "left" and "right" are employed for the convenience of explanation, and in case drawings illustrated in the present specification are inversed, the location relations described in the specification may be inversely understood.

Hereinafter, implementations of the present disclosure will be described with reference to the accompanying drawings.

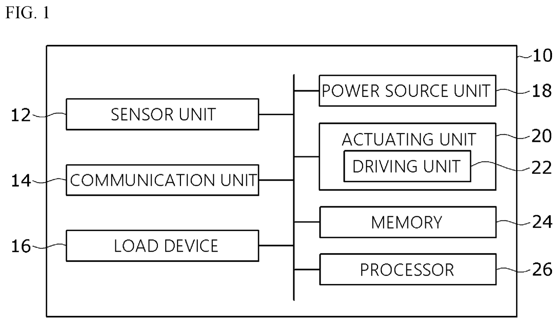

Hereinafter, FIG. 1 shows a schematic diagram illustrating examples of modules that can be implemented in various types of movable mobility apparatuses.

The mobility apparatus 10 may be a vehicle having mobility. The mobility may be utilized to carry a person, an object for a specific purpose, and/or a baggage while moving between different locations. As such, the mobility apparatus 10 may provide mobility for transportation and other purposes. Another purpose is, for example, to detect or monitor an environment around the mobility apparatus 10 while an observation device is mounted. For example, the mobility apparatus 10 may be mounted with a camera to photograph or analyze the surrounding environment and transmit the photographed or analyzed image to another apparatus. The mobility apparatus 10 is not limited to the above-described example and may be used for various purposes.

The mobility apparatus 10 may travel on or through different types of environments including ground, underground, air, outer space, water, and/or underwater. The mobility apparatus 10 travelling on the ground or underground may be provided in a form of, for example, a vehicle, a robot, or the like, and the mobility apparatus 10 travelling through the air or outer space may be provided as an air mobility apparatus, for example, in a form of a fixed-wing or rotary-wing aircraft, an advanced air mobility (AAM), a mobility device mounted on an unmanned airplane or a drone, a rocket, or an artificial satellite, or the like. The mobility apparatus 10 travelling on water or underwater may be, for example, a ship, a submarine, or the like. The mobility apparatus 10 is not limited to a specific environment and in general may be an apparatus capable of moving and travelling in any or all of the above-described environments, e.g., a moving apparatus that can travel in a plurality of different environments, for example, an amphibious vehicle, a flight-capable vehicle, or the like

In addition, the mobility apparatus 10 may move through control of manual operation, autonomous control, or a combination thereof. The manual operation may be implemented by a driver or operator through an interface such as a steering device provided in the mobility apparatus 10 or may be implemented by remote control by a control station or an external control station. The autonomous control, e.g., autonomous movement, may be performed by independent processing of the mobility apparatus 10 or may be performed by a combination of remote control through a control station and collaborative processing with the control station of the mobility apparatus 10.

In some implementations, the mobility apparatus 10 operated in various forms may be designed differently according to intended uses, environments, driving modes, control modes, and the like but may have various functional modules as illustrated in FIG. 1 that can enable mobility. In particular, FIG. 1 describes examples of various functions in various types of mobility apparatus 10. However, implementations are not limited thereto, and the mobility apparatus 10 can have fewer functions or can have other functions that are not illustrated in FIG. 1.

The mobility apparatus 10 may include a sensor unit 12, a communication unit 14, and a load device 16.

The sensor unit 12 may include various types of detectors that sense various states and situations occurring in the external and internal environments of the mobility apparatus 10. For example, the sensor unit 12 may include a positioning sensor that senses position information of the mobility apparatus 10. In some implementations, the sensor unit 12 includes different types of sensors and is able to obtain sensing data detected from each sensor. The sensor unit 12 may acquire various types of data, such as sensor data that can be used for movement control of the mobility apparatus 10, state data for detecting a state of various modules constituting the mobility apparatus 10, situation data for detecting a situation of a passenger and/or a luggage in the mobility apparatus 10, and the like. The sensor unit 12 may provide the data to a processor 26 that executes one or more stored instructions to induce a function and operation of the mobility apparatus 10. In some implementations of the present disclosure, the movement control may be at least one of operation controls related to linear movement, turning, acceleration and deceleration of the mobility apparatus 10, attitude control, braking, hovering, and the like of the mobility apparatus 10. In some implementations of the present disclosure, hovering may be a control in which a thrust is generated in a downward or vertical direction with respect to the mobility apparatus 10, causing a specific operation or movement of the mobility apparatus 10. The specific action or movement may be, for example, a takeoff, a landing, or a substantially stationary flight in a limited range, or the like. The above-described data of the sensor unit 12 are merely examples and may further include sensor data for detecting various situations that are not listed here.

The communication unit 14 may support mutual communication with other devices to exchange data with other external devices. The other devices may be, for example, servers that control one or more aspects the mobility apparatus 10 or exchange data related to movement control of the mobility apparatus 10, ancillary devices for supporting movement, other mobility apparatuses, and the like. The servers may be referred to by various terms such as a traffic control apparatus, a management apparatus, a control apparatus, and the like. The communication unit 14 may transmit data generated or stored during movement of the mobility apparatus 10 to the other devices, and may receive data and software modules transmitted from the other devices. Various types of communication protocols can be implemented by the communication unit 14 according to a type of the mobility apparatuses 10, and for example, the communication unit 14 may perform communication with other vehicles or other devices based on cellular communication, wireless access in vehicular environment (WAVE) communication, dedicated short range communication (DSRC) or short range communication, or other communication schemes. The communication protocols and schemes listed above are examples and are not limited thereto.

The load device 16 is mounted on the mobility apparatus 10 and may be an ancillary device that consumes electric power supplied from the power source unit 18 or converted from the output of the power source unit by a user's utilization or an instruction for managing an item such as luggage transported by the mobility apparatus 10. The load device 114 may be a type of non-mobile electric device except for a mobile power system used in a driving unit 22 and the like in the present disclosure. The load device 16 may be, for example, a display system, an air conditioning system, a lighting system, a seat system, and various devices installed in the mobility apparatus 10.

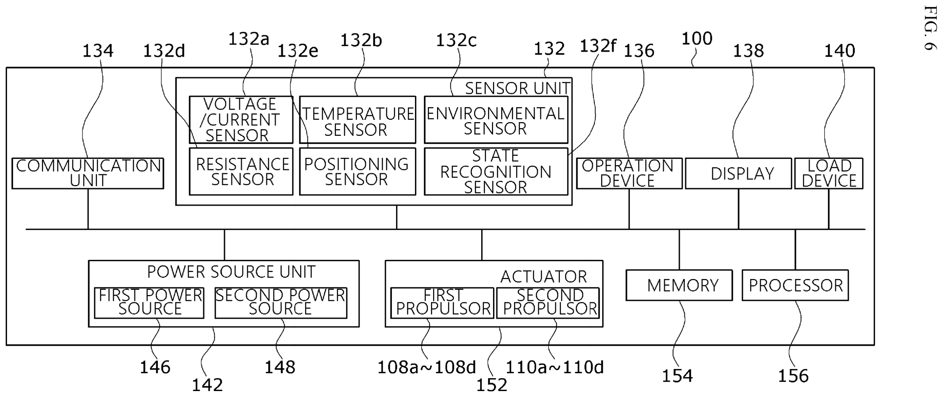

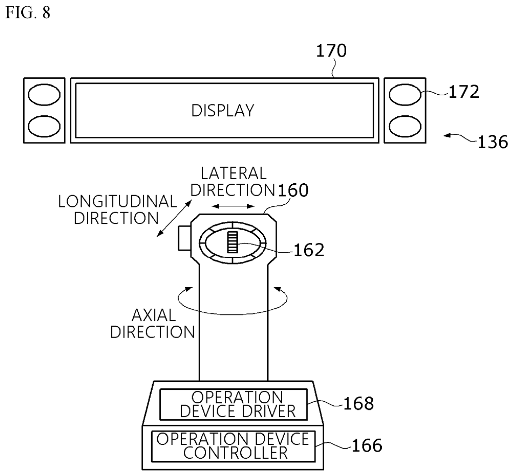

The mobility apparatus 10 may include an interface that can receive user input, e.g., as a request for movement control and operation of the load device 16. The interface may be implemented as a hardware device, a software interface, or the like. The hardware interface can be a hardware manipulator for a movement operation that can be manipulated by a user for the mobility apparatus 10, and may be, for example, an air control stick, a ground steering wheel, a ground pedal, a button, a marine steering handler, or the like but is not limited thereto. The software interface may be, for example, a display interface allowing for touch input but is not limited thereto. Further details and examples of the interface are described further below with reference to FIGS. 6 and 8.

In addition, the mobility apparatus 10 may include a power source unit 18, an actuating unit 20, and a driving unit 22.

The power source unit 18 may generate and supply power and electric power to be used by a mobile power system such as the driving unit 22 and the load device 16. The mobility apparatus 10 may generate energy by at least one of various energy sources. For example, when the mobility apparatus 10 is driven by electric energy, the power source unit 18 may be configured with, for example, an electric battery or a combination of an electric battery and a charging module for charging the battery. When the power source unit 18 is configured with an electric battery alone, the electric battery may be charged from a charging station or another mobility apparatus to supply electric power. In the case of a combination of an electric battery and a charging module, the power source unit 18 may implement at least one of a fuel cell and a fossil energy-based engine as the charging module. The fuel cell may use a material used to generate electric power, for example, hydrogen gas. In the case where the power source unit is an engine, the power source unit 18 includes a generator coupled to the engine, and the generator may convert mechanical energy generated in the engine into electric energy to charge the electric battery by the converted electric energy.

In another example, when the mobility apparatus 10 is driven by fossil energy or nuclear fuel, the power source unit 18 may be configured as an internal combustion engine, a turbine engine, a nuclear fuel-based engine, or the like. In still another example, the mobility apparatus 10 may have a power source unit 18 included in a hybrid form of a fossil energy-based engine and an electric battery. The power source unit 18 in the hybrid form may charge the electric battery by using an output of the engine generated during movement and select either power of the engine or electric power of the electric battery according to a state of the mobility apparatus 10, characteristics of a movement path, a movement situation, or the like to generate a movement driving force of the driving unit 22. In another example, the power source unit 18 in the hybrid form may include an electric battery that is rechargeable by an external source and an engine. The processor 26 may switch to either power of the engine or electric power of the electric battery according to various situations and states to apply energy to the driving unit 22, thereby generating a movement driving force.

The actuating unit 20 may include at least one module that implements a movement operation for the mobility apparatus 10. For example, when the mobility apparatus 10 is an air mobility apparatus, the actuating unit may include a mechanical and software component that performs at least one of control of a flight attitude, hovering control related to takeoff and landing, altitude change control, and turning operation control. The flight attitude may be related to a roll, a yaw, and a pitch of the air mobility apparatus. When the mobility apparatus 10 is a ground mobility apparatus, the actuating unit 20 may include, for example, mechanical and software components that implement at least one traveling operation of longitudinal control such as acceleration and deceleration and lateral control such as steering. In the present disclosure, the actuating unit 20 may also be referred to as an actuator.

In some implementations, the actuating unit 20 may include a driving unit 22. The driving unit 22 is a module for externally implementing operations such as linear movement, turning, acceleration and deceleration of the mobility apparatus 10, attitude control, braking, and hovering of the mobility apparatus 10 and may be implemented in various forms according to the type of the mobility apparatus 10. For example, when the mobility apparatus 10 is an air mobility apparatus, the driving unit of the fixed-wing air mobility apparatus may be a turbine engine, a flap, or the like installed at a main wing, a tail wing, or the like to implement operations related to thrust and lift of the air mobility apparatus.

In another example, the fixed-wing air mobility apparatus may further include a propulsor such as a propeller in a predetermined portion of the main wing. In such scenarios, the driving unit 22 of a typical rotary-wing air mobility apparatus may be a rotor type propulsor, a flap, or the like installed on the upper portion of the fuselage and the tail wing. The air mobility apparatus may include a wheel such as a landing gear required for takeoff and landing according to specifications, and the wheel may be accommodated into the fuselage during flight.

As another example, an advanced air mobility (AAM) type driving unit 22 may include a rotor type propulsor or a flap, similar to the rotary wing air mobility apparatus. The propulsor applied to the AAM type may generate power for hovering flight, cruising flight, and attitude control, thereby generating thrust and lift. The propulsor may be fixed at least to the main wing in a non-tilting manner or may be installed at least at the main wing in a tiltable manner. As another example, a plurality of propulsors applied to the AAM type may also be installed inside the main wing. In addition, the driving unit 22 of the AAM type may be configured to rotate the wing to which the propulsor is coupled, in a predetermined angle range. The flap is a type of control surface and may be operated in response to a request related to hovering flight, cruising flight. and attitude control. The driving unit 22 of the AAM type may include wheels such as landing gears that are accommodated into the fuselage during flight and pulled out at takeoff and landing according to specifications.

When the air mobility apparatus of the AAM type is driven by electrical energy, the driving unit 22 may include a motor and an inverter which rotate a propeller mainly by electrical power. When the air mobility apparatus of the AAM type is driven by a non-electrical energy basis, for example, by fossil energy, the driving unit 22 may include modules for transmitting the rotational forces generated mainly in the internal combustion engine to the propeller.

When the mobility apparatus 10 is a ground mobility, the driving unit 22 may include a plurality of wheels, a driving force transmission module for generating a driving force and applying or transmitting the driving force to the wheels, a braking module for decelerating the driving of the wheels, and a steering module for implementing lateral control of the wheels. The wheels, the driving force transmission module, the braking module, and the like may constitute a driving assembly, and a plurality of driving assemblies may be provided according to the number of wheels. When the ground mobility apparatus is driven by electric energy, the driving force transmission module may be configured as a motor module generating a driving force based on power output from an electric battery. When the ground mobility apparatus is operated based by fossil energy, the driving force transmission module may include a transmission and a gear module that transmit power of an internal combustion engine.

When the mobility apparatus 10 is a marine or underwater mobility, the driving unit 22 may include a steering rudder, a propeller for a propulsor, a module for transmitting power and predetermined motion thereto, and the like.

In addition, the mobility apparatus 10 may include a memory 24 and a processor 26.

The memory 24 may store various software applications and various types of data for controlling the mobility apparatus 10 and may load the software application or read and write the data according to a request of the processor 26. The software application and the data can be different according to a type and detailed specifications of the mobility apparatus 10 and may include various types of data, such as sensor data related to movement control, state data of mobility related to the movement control, data received from another device, and data related to energy control between the power source unit 18 and the driving unit 22. In addition, the software application and the data may include data related to control of a module in charge of a function other than the above-described control, software related to operation of a computing system of mobility, information and an application for autonomous movement, path information, various information and control programs for passenger convenience, and the like.

In some implementations of the present disclosure, the processor 26 may process movement control, path control, energy control, control of the load device 16, autonomous movement control, convenience function control, and the like by using software applications, software instructions, and data stored in the memory 24. The processor 26 may also have different control processes according to the type and detailed specifications of the mobility apparatus 10. The processor 26 may be implemented, for example, as a single processing module. For another example, processing according to the above-described matters may be performed in a distributed manner in a plurality of processing modules, and a plurality of processing modules may also be collectively referred to as the processor 26 in the present disclosure.

Hereinafter, an air mobility apparatus according to an implementation of the present disclosure will be described. Specifically, in the present disclosure, an AAM type air mobility apparatus is mainly described among various types of air mobility apparatus. Although an AAM type of air mobility apparatus is described, the description is also applicable to other types of air mobility apparatus. More broadly, the description is also applicable to ground, underground, outer space, marine, and underwater mobility apparatuses.

The AAM type air mobility apparatuses may be classified into vertical take-off and landing (VTOL) type, short take-off and landing (STOL) type, conventional take-off and landing (CTOL) type, and the like according to a take-off and landing method. The VTOL may be an air mobility apparatus that can take off and land vertically without a runway, the STOL may be an air mobility apparatus that can take off and land with a relatively short runway or at a low speed, and the CTOL may be an air mobility apparatus that can take off and land with a longer runway or at a higher speed compared to the STOL. In addition, the VTOL may be classified into a vectored thrusted (or tilting rotor) propulsion, a lift-and-cruise propulsion, a multicopter propulsion, and the like, according to a propulsion technique. In the case of the tilting rotor propulsion, at least a part of a plurality of propulsors may be tilted so as to be fully utilized for hovering and cruising.

In some implementations of the present disclosure, flight control according to the hovering mode may be a control that generates a thrust to be directed downward or vertically with respect to the fuselage of the air mobility apparatus, thereby inducing a specific operation in the mobility apparatus 10. The specific operation may be, for example, takeoff, landing, or substantially stationary flight within a limited range. Flight control according to the cruising mode may be control related to forward flight, horizontal flight, or the like. The lift-and-cruise propulsion may separately include a hovering propulsor and a cruising propulsor without tilting the rotor according to the flight mode. The multicopter propulsion may include a plurality of propulsors arranged in the horizontal direction of the fuselage, similar to a drone, and may implement takeoff and landing and cruising flight through attitude control of the fuselage.

Although the present disclosure mainly describes a VTOL air mobility apparatus having a motor type propulsor and a vector thrust mode, the functions, modules, and devices of the air mobility apparatus described in the present disclosure are applicable to other types of air mobility apparatuses.

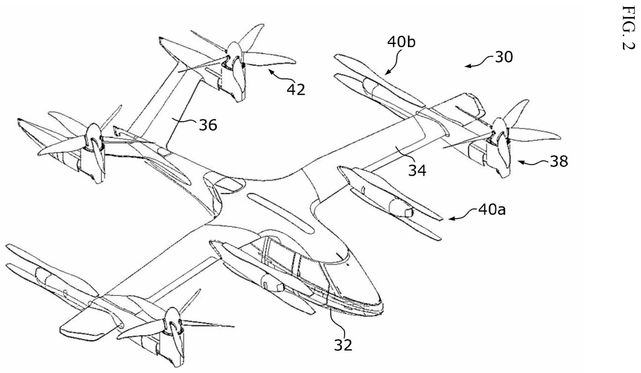

FIG. 2 shows a diagram illustrating an air mobility apparatus according to an example of the present disclosure.

An air mobility apparatus 30 according to an example may include a streamlined fuselage 32, main wings 34 disposed on left and right sides of a central region of the fuselage 32, and a tail wing 36 disposed in an end region of the fuselage. The fuselage 32 may have, for example, a cabin in which a pilot and a passenger board, and a space in which items such as luggage are loaded. The main wing 34 and the tail wing 36 may be configured as fixed wings.

The main wing 34 may have an inboard region and an outboard region. The main wing tilting propulsor 38 having a tilting rotor may be disposed in a front region of the left and right outboards. Main wing non-tilting propulsors 40a and 40b arranged in the horizontal direction of the fuselage 32 are disposed in the left and right inboard regions and the rear regions of the left and left outboards and may also be referred to as lift propulsors. In addition, a tail wing tilting propulsor 42 having a tilting rotator may be disposed at an end of the tail wing 36.

Each of the above-described propulsors may include a propeller having a plurality of blades, a hub having a shaft to which an end of each blade is coupled, a motor that supplies rotational force to the shaft, an inverter that adjusts electric power or converts electric power form of the power source unit 18 based on a flight situation, a motor specification, or the like, a propulsor cooling module that cools the motor and the inverter, and the like.

The main wing tilting propulsor 38 and the tail wing tilting propulsor 42 may include a nacelle that accommodates and covers the above-described members. The main wing tilting propulsor 38 or the tail wing tilting propulsor 42 may be fixed to the main wing and the tail wing by hinge coupling between a boom protruding from the main wing outboard region and the end of the tail wing and the nacelle and may be tilted with respect to the boom. In the present disclosure, the propulsor may be referred to as a rotor, a proprotor, a propulsion assembly, or the like.

When the flight mode is the hovering mode according to a takeoff and landing situation or the like, the main wing tilting propulsor 38 or the tail wing tilting propulsor 42 may be tilted to be substantially parallel to a blade arrangement direction of the main wing non-tilting propulsor 40a by the hinge coupling. When the flight mode is the cruising mode according to horizontal flight or the like, each of the main wing tilting propulsor 38 and the tail wing tilting propulsor 42 may also be tilted by hinge coupling to be spaced apart from each other by a predetermined angle in a blade arrangement direction. FIG. 2 illustrates that an assembly for tilting is formed using hinge coupling between a mount and a nacelle.

As another example, a tilting assembly may be implemented by other mechanisms that do not use hinge coupling. For example, a multi-joint linkage may be connected to each predetermined point of a nacelle and a mount that accommodate the modules of the main wing non-tilting propulsors 40a and 40b, and the nacelle or mount may not have a physically coupled portion. Accordingly, in the hovering mode, the multi-joint linkage may be expanded to pivot the main wing tilting propulsor 38 and the tail wing tilting propulsor 42 to be substantially perpendicular to the fuselage 32, and in the cruising mode, the multi-joint linkage may be contracted to pivot the main wing tilting propulsor 38 and the tail wing tilting propulsor 42 to be substantially parallel to the fuselage 32. The tilting of the main wing tilting propulsor 38 and the tail wing tilting propulsor 42 may be synchronized according to the flight mode, and the tilting of each propulsor may be adjusted differently according to the attitude control and flight situation in the same flight mode.

The main wing non-tilting propulsors 40a and 40b may be disposed at the ends of the booms protruding from the inboard front region and the outboard rear region of the main wing 34. The main wing non-tilting propulsors 40a and 40b may be formed as a dual propeller or a single propeller in which two propellers overlap each other, as illustrated in FIG. 2. The main wing non-tilting propulsors 40a and 40b are mainly activated in a hovering mode, but may be driven according to attitude control and flight conditions even in a cruising mode. In the present disclosure, the non-tilting propulsors 40a and 40b may also be referred to as lift rotors, lift assemblies, and the like.

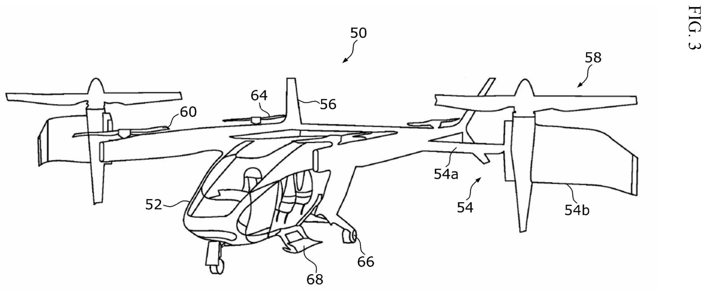

Although the tilting and non-tilting propulsors are described in the present disclosure as being arranged as in FIG. 2, they are not limited to the arrangement of FIG. 2, and these propulsors may be arranged in other positions. In addition, although four tilting propulsors and two non-tilting propulsors are shown in FIG. 2 and are not limited to the number described above, they may be modified into various numbers. Modified implementations related to the arrangement and number of the tilting and the non-tilting propulsors are illustrated in FIGS. 3 to 5, but they may be designed into various forms that are not mentioned in the present disclosure.

In some implementations, the main wing 34 may include a flap serving as a control surface at a rear edge of the main wing 34. In addition, in some implementations, the tail wing 36 may include a flap serving as a control surface at a rear edge of the tail wing 36. The propulsors 38 and 42 and the flaps may control flight by generating thrust, speed, and attitude control required in the hovering mode and the cruising mode.

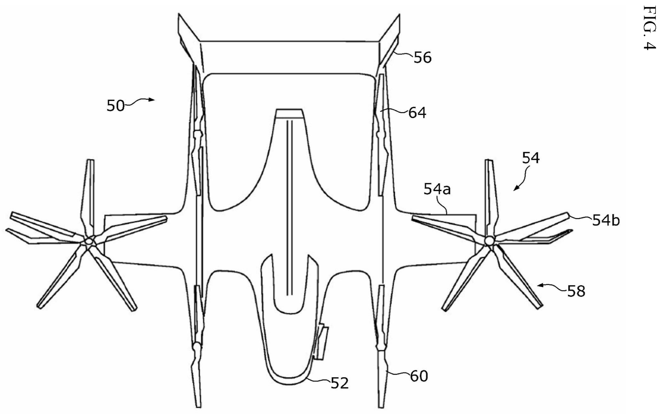

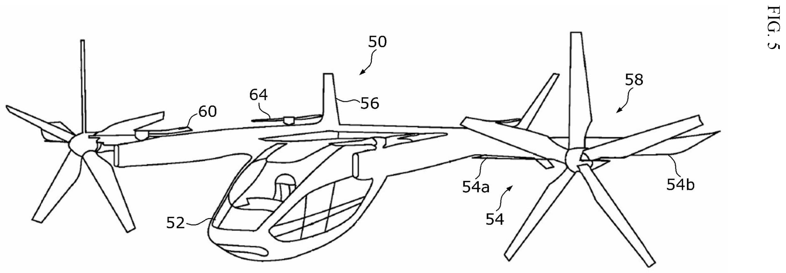

An air mobility apparatus according to other examples of the present disclosure will be described with reference to FIGS. 3 to 5. FIG. 3 shows a diagram illustrating an air mobility apparatus implementing a hovering mode as an air mobility apparatus according to another example of the disclosure. FIG. 4 shows a diagram illustrating a top portion of an air mobility apparatus implementing a hovering mode. FIG. 5 shows a diagram illustrating an air mobility apparatus implementing a cruising mode as an air mobility apparatus according to another example of the disclosure.

The air mobility apparatus according to other examples of FIGS. 3 to 5 is substantially similar to the example of FIG. 2 except for the detailed configuration of the tilting propulsor. Hereinafter, descriptions of the same functions and members as those of FIG. 2 will be omitted, and the air mobility apparatuses according to other examples will be described focusing on differences from FIG. 2.

An air mobility apparatus 50 of another example may include a fuselage 52, main wings 54 disposed on left and right sides of a central region of the fuselage 52, and a tail wing 56 connected to a rod perpendicular to an extending direction of the main wing 54 and disposed in an end region of the fuselage 52.

The main wing 54 may have an inboard region and an outboard region. A tilting propulsor 58 having a tilting rotor may be disposed in a front region of left and right outboards. The tilting propulsor 58 may be fixed to the main wing by a boom provided in the outboard region of the main wing. Non-tilting propulsors 60 and 64 arranged in the horizontal direction of the fuselage 52 are disposed in a front region and a rear region of rods extending in the left and right inboard regions and may also be referred to as lift propulsors.

In some implementations, the outboard region of the main wing 54 is partitioned from a horizontal surface 54a of the inboard region to have a lift surface 54b, and the tilting propulsor 58 may be mounted on a boom protruding from the lift surface. The lift surface 54b may have a bent winglet at a tip of the wing. In an example, the tilting propulsor 58 and the lift surface 54b may be configured to rotate or move together. In another example different from FIGS. 3 to 5, when the lift surface 54b is separated from the boom, the tilting propulsor 58 may move or rotate with the lift surface except for a portion of the lift surface 54b including the fuselage 110. In yet another example, the tilted propulsor 58 may be operated such that only the hub and the blade move or rotate.

According to the above description, when the flight mode is a hovering mode, the tilting propulsor 58 may be tilted so as to be substantially parallel to the blade arrangement direction of the non-tilting propulsors 60 and 64, as shown in FIGS. 3 and 4. When the flight mode is a cruising mode according to horizontal flight or the like, the tilting propulsor 58 may also be tilted to be spaced apart from the blade arrangement direction by a specific angle, as shown in FIG. 5.

In addition, although not shown in FIGS. 3 to 5, the main wing 54 and the tail wing 56 may have flaps at a rear edge of each wing that serve as control surfaces.

The air mobility apparatus 50 according to the present example may include a gear 66 for landing on a land and/or water that is telescoping or non-telescoping. The gear 66 may be disposed both in the front and back of the air mobility apparatus 30 and may include wheels, treads, pontoons, or other components that may help the air mobility apparatus land on a ground and/or water. In addition, the air mobility apparatus 50 may include a stepper 68 and a side door that are retractable from the fuselage 52 when a passenger gets on or off.

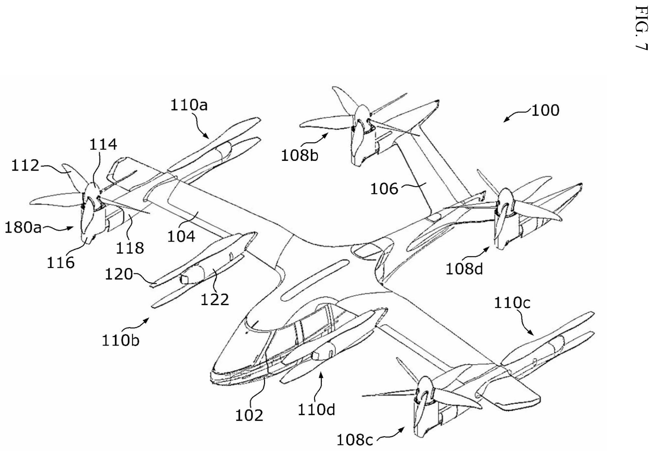

An air mobility apparatus according to an implementation of the present disclosure will be described with reference to FIGS. 6 and 7. FIG. 6 shows a diagram schematically illustrating modules included in an air mobility apparatus according an implementation of the present disclosure. FIG. 7 shows a diagram illustrating an air mobility apparatus according to an implementation of the present disclosure.

A VTOL air mobility apparatus having the motor propulsor illustrated in FIGS. 2 to 5 is mainly described, but the functions, modules and devices of the air mobility apparatus described in the present disclosure are also applicable to other types of air mobility apparatus as long as they are technically combinable. In addition, some of the descriptions of the functional modules in FIG. 6 are substantially the same as those in FIG. 1, and the same will be described briefly.

The air mobility apparatus 100 may include a sensor unit 132, a communication unit 134, a mobility control operation device 136, a display 138, a load device 140, a power source unit 142, an actuator 152, a memory 154, and a processor 156. The air mobility apparatus 100 according to an implementation of the present disclosure may also be referred to as a mobility apparatus in the detailed description and claims. Hereinafter, the mobility apparatus 100 having an aviation function will be mainly described as an air mobility apparatus for clarity of description.

The sensor unit 132 may include various types of detectors that detect various states and situations occurring in the external and internal environments of the air mobility apparatus 100. The sensor unit 132 may acquire sensor data used for flight control, state data for detecting a state of a module constituting the air mobility apparatus, situation data for detecting a situation of a passenger and/or a luggage, and the like and provide the date to a processor 156 that induces a specific function and operation.

For example, the sensor unit 132 may include a voltage/current sensor 132a, a temperature sensor 132b, an environmental sensor 132c, a resistance sensor 132d, a positioning sensor 132e, and a state recognition sensor 132f.

The voltage/current sensor 132a may detect, for example, an electrical state of at least one of an electric battery of the power source unit 142, a charging module thereof, and a motor and an inverter of propulsors 108a to 108d and 110a to 110d. The electric battery may be a secondary battery that is rechargeable from the outside but does not generate electric power by itself. The charging module of the battery is a battery having a self-generating capability, and the self-generating battery may supply electric power to the propulsors 108a to 108d and 110a to 110d. The self-generating battery is, for example, a fuel cell module but is not limited thereto. The processor 156 may detect a flight mode, a flight control state, a battery control state, a motor control state, an inverter control state, and a failure/abnormality situation of these modules based on data detected from the voltage/current sensor 132a, for example, the electrical state and the amount of change of the battery, the motor, and the inverter.

The temperature sensor 132b may detect, for example, a temperature of at least one of a secondary battery of the power source unit 142, a self-generating battery, a motor and an inverter of the propulsors 108a to 108d and 110a to 110d, and a cooling system controlling a temperature of the propulsors 108a to 108d and 110a and 110d. In the case of the cooling system, the temperature sensor 132b may measure a temperature of a cooling medium circulating in the cooling system and may estimate a temperature of the motor and the inverter. The processor 156 may detect a flight mode, a flight control state, a battery control state, a motor control state, an inverter control state, and a failure/abnormality situation of these modules based on temperature data of the battery, the motor, and the inverter detected from the temperature sensor 132b.

The environment sensor 132c may include, for example, a camera, a radar sensor, a lidar sensor, or the like, and may detect an external environment. The resistance sensor 132d may detect, for example, an operating resistance of at least one of a secondary battery of the power source unit 142, a self-generating battery, and a motor and an inverter of the propulsors 108a to 108d and 110a to 110d. The processor 156 may detect a flight mode, a flight control state, a control state of the modules, and a failure/abnormality situation of the modules based on resistance data of the battery, the motor, and the inverter detected from the resistance sensor 132d.

The positioning sensor 132e is a module for identifying the position of the air mobility apparatus 100, and may be configured as, for example, a GPS sensor or a GNSS sensor.

The state recognition sensor 132f may detect a motion according to an operation of an aircraft, a load applied to an actuator 152, and an altitude of the aircraft. The state recognition sensor 133f may detect a state of each of three axes of the fuselage 32, for example, yaw, pitch, and roll, and output a motion state of the aircraft based on the above-described parameters. Such a state recognition sensor may include, for example, an IMU sensor, a gyro sensor, and the like. In addition, the state recognition sensor 132f includes an altimeter and may detect a change in altitude of an aircraft. In addition, the state recognition sensors 132f may include a load detection sensor that measures an aircraft load applied to, for example, at least one of the propulsor 108a to 108d and 110a to 110d, the main wing 104, and the tail wing 106. The load detection sensor may be provided in a specific part of the fuselage. The aircraft load may be a force or a pressure applied to at least the actuator 152, the wings 104 and 106, and the fuselage 102 by an ambient airflow during flight.

The above-described data of the sensor unit 132 are merely examples, and may further include sensor data for sensing various situations not listed here.

In some implementations, the mobility control operation device 136 may be configured to receive a piloting input for manual flight control of a pilot. As an example, the mobility control operation device 136, as illustrated in FIG. 8, may include at least one inceptor 160 that can be controlled by a user in the fuselage 102. In some implementations, in addition to hardware, the mobility control operation device 136 may further include various software-based user interface functionality such as a soft key. In some implementations, in addition to the inceptor 160, the mobility control operation device 136 may further include at least one of a control wheel, a pedal, a lever, and a throttle. For example, a throttle 162 may be implemented on the inceptor 160, as illustrated in FIG. 8. The mobility control operation device 136 may receive a flight control instruction of the pilot, for example, an instruction related to a thrust, a speed, and an attitude.

The user interface may be implemented on, for example, a display 170. The display 170 may be displayed by the processor 156 to output various information, such as an attitude state, a control state, mission information, path information, and remaining energy information of the air mobility apparatus 100, a surrounding environment image obtained from an environment sensor 132c, and the like.

In some implementations, the mobility control operation device 136 may include a switch 172 that activates or deactivates an automatic piloting mode and a manual piloting mode at the request of a pilot. The switch 172 is illustrated as a button in FIG. 8 but is not limited thereto, and, for example, may be provided as a user interface on the display 170.

An automatic piloting mode may be a mode of autonomously flying, e.g., without intervention of a pilot. A manual piloting mode may also be a mode of manually flying according to a pilot's piloting input through the mobility control operation device 136. In some implementations, when the air mobility apparatus 100 is autonomously flying in the automatic piloting mode, the mobility control operation device 136 may perform automatic movements that correspond to the flight control data and the automatic piloting parameters, e.g., related to the thrust and the attitude requested by the processor 156.

In some implementations, the automatic movement of the mobility control operation device 136 may be controlled by an operation device controller 166 and an operation device driver 168. For example the operation device controller 166 may generate position data for the mobility control operation device 136, which corresponds to a positioning of the mobility control operation device 136 as it is controlled to move based on automatic piloting parameters received from the processor 156. For example, when the mobility control operation device 136 includes an inceptor 160, the position data may include a position associated with each of the axial directions illustrated in FIG. 8, specifically, the longitudinal direction, the lateral direction, and the axial direction. Although the mobility control operation device 136 is illustrated in FIG. 7 as an inceptor 160, other configurations can be implemented such as a pedal, a lever, a throttle, and the like may also be automatically moved in accordance with the automatic piloting parameters. The operation device driver 168 may be mechanically coupled with an inceptor 160 and may move the tail wing 106 based on the position data.

The power source unit 142 may generate and supply power and electric power for use by the propulsors 108a to 108d and 110a to 110d and the load device 140. According to the implementation of FIG. 6, the power source unit 142 is illustrated as having a first power source 146 and a second power source 148.

The first power source 146 and the second power source 148 may include homogeneous or heterogeneous secondary batteries. The first power source 146 and the second power source 148 may, for example, include either a high-power battery or a high-energy battery. High-power batteries have higher discharge characteristic values than high-energy batteries, and may also be referred to as high-discharge batteries. High-energy batteries may be secondary batteries that have higher energy capacity than high-power batteries, but have lower peak output characteristics compared to high-power batteries.

In another example, the first power source 146 and the second power source 148 may be different types of electric power sources. The first power source 146 may be a rechargeable secondary battery, and the second power source 148 may be a power source that charges the first power source 146 or supplies electric power to propulsors 108a to 108d and 110a to 110d. For example, the second power source 148 may be a fuel cell or an internal combustion engine.

Although the battery is illustrated in FIG. 6 as two electric power sources, three or more electric power sources may be configured to supply electric power to first propulsors 108a to 108d and second propulsors 110a to 110d.

The actuator 152 includes a plurality of propulsors 108a to 108d and 110a to 110d and may also be referred to as an actuating unit. The plurality of propulsors 108a to 108d and 110a to 110d may be components corresponding to the driving unit 22 of FIG. 1 in the air mobility apparatus 100.

The propulsors 108a to 108d and 110a to 110d may include a propeller having a plurality of blades, a hub, a motor, an inverter, a propulsor cooling module, and the like. Th In some implementations, the motor may be configured as a dual three-phase motor for redundancy. Two inverters may be provided to correspond to each of the three-phase motors. The propulsors 108a to 108d and 110a to 110d and the motor will be described in detail later.

FIG. 7 illustrates an example of an air mobility apparatus 100 having a tilting rotor type. In the case of a tilting rotor, at least some of the plurality of propulsors 108a to 108d and 110a to 110d may be tilted. As illustrated in FIG. 7 the first propulsor 108a and 108d may be configured as a tiltable rotor, and the second propulsor 110a to 110d may be configured as a fixed rotor. Here, the fixed rotor may mean a rotor having a blade arrangement that is not tilted during flight and is fixed.

The first propulsors 108a to 108d are installed in the main wing 104 and the tail wing 106 and may be hinge-coupled at a boom 118 extending from the wings. The first propulsors 108a to 108d have a nacelle 116 that accommodates at least a motor that supplies power to the propeller 112, and the nacelle 116 may be tilted with respect to the boom 118. The position and tilting structure of the first propulsors 108a to 108d is not limited to the example of FIG. 7 and may be variously configured. The first propulsors 108a to 108d may be operated in a hovering mode, a cruising mode, and a transition between these modes. For the hovering mode, the first propulsors 108a to 108d may be operated with the blade arrangement shown in FIG. 7, while for the cruising mode, the first propulsors 108a to 108d may be operated to with the same arrangement as the blades of the second propulsors 110a to 110d shown in FIG.7.

The second propulsors 110a to 110d may lift rotors, and may be fixedly installed in the boom 118 extending from the main wing 104. The positions and the tilting structures of the second propulsors 110a to 110d are not limited to the example of FIG. 7 and may be variously configured. The second propulsors 110a to 110d are mainly used in a hovering mode but may be operated according to a flight situation caused in a horizontal flight. In the present disclosure, the first propulsors 108a to 108d and the second propulsors 110a to 110d may each be a single propulsor or may also be referred to as a propulsor set. For example, a first propulsor set including a plurality of tilting rotors may be abbreviated as a first propulsor 108a to 108d, and a second propulsor set including a plurality of fixed rotors may be referred to as a second propulsor 110a to 110 d.

The tilting rotor type is different from that of FIG. 7 and may be a type in which all of the plurality of propulsors serve as tilting rotors. The implementations of the present disclosure may be applied to both the lift-and-cruise type and the multicopter type.

In addition, although not shown in FIG. 7, the main wing 104 and the tail wing 106 may have a flap at a rear edge of each wing that serves as a control surface. The control surfaces may be operated in response to requests related to, for example, hovering flight, cruising flight, and attitude control.

In some implementations, the power source unit 142 may include a plurality of batteries for stability of energy supply to the first and second propulsors 108a to 108d and the second propulsors 110a to 110d, redundancy, and stable thrust. For the above-described purposes, the first power source 146 and the second power source 148 may be dually electrically connected to each propulsor 108a to 108d and 110a to 110d. The first power source 146 and the second power source 148 may be installed in, for example, at least one of the fuselage 102, the main wing 104 or the tail wing 106, for example.

The memory 154 may store an application and various types of data for flight control of the air mobility apparatus 100 and may load the application or read and write the data according to a request of the processor 156. The application and the data in the present disclosure may be software and data related to the flight control according to the automatic piloting mode and the control handover. The data may include sensor data, state data of the air mobility apparatus, flight parameters, and the like. In addition, the application and the data may store and manage the data and software mentioned in FIG. 1 in addition to those described above.

The processor 156 may use software applications, software instructions, and data stored in the memory 154 to process flight control, path control, power/energy control through a powertrain, autonomous movement control, and the like. In relation to the present disclosure, the processor 156 may execute processing to activate a manual piloting mode based on an input of a pilot during flight according to an automatic piloting mode. The processor 156 may perform processing to generate a blend parameter based on an automatic piloting parameter of the automatic piloting mode and a manual piloting parameter according to a piloting input of the pilot during a transition time. The processor 156 may control the actuator 152 based on the blend parameter during the transition time. Details of the above-described processing will be described below.

The processor 156 may be configured as a single processing unit or may include a plurality of processing units for distributed processing. The plurality of processing units may include an air processing system (APS), a flight control unit (FCC), a power control unit (PCU), a battery controller, a thermal management system (TMS), a full processing system (FPS), and the like, but are not limited thereto.

In some implementations, although operations according to the present disclosure are processed in a distributed manner by a plurality of systems or controllers, for convenience of description, these may be collectively referred to as a processor 156. The processor 156 will be described as processing functions, operations, and processes according to an implementation of the present disclosure.

In some implementations, the present disclosure mainly describes the air mobility apparatus 100 of the VTOL type. However, when another type of mobility apparatus, for example, a ground mobility apparatus, a robot, a drone, or the like, is provided with a system similar to that of the present disclosure, the technical idea according to the examples and implementations of the present disclosure may be applied to other types of mobility apparatuses.

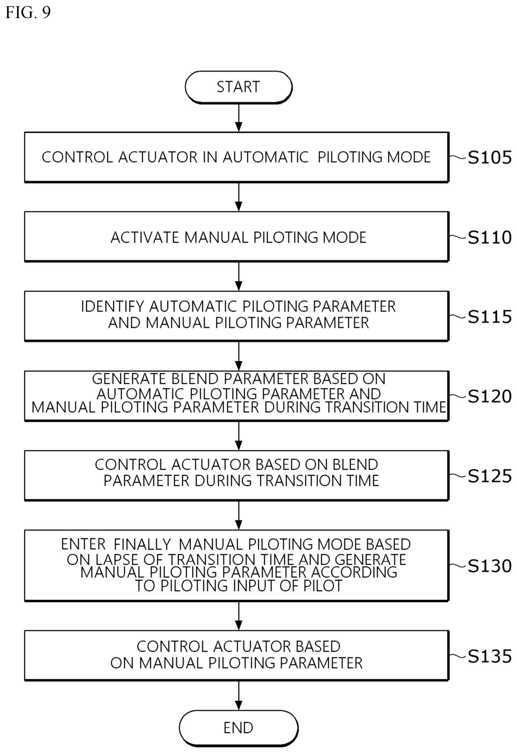

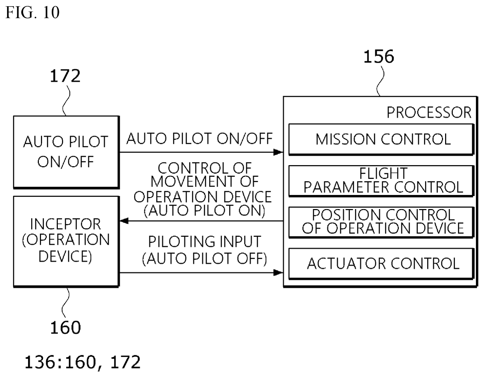

Hereinafter, with reference to FIG. 9 and FIG. 10, a flight control method according to another implementation of the present disclosure, which is processed in switching from an automatic piloting mode to a manual piloting mode, will be described. FIG. 9 shows a flowchart illustrating an example of a flight control method according to another implementation of the disclosure. FIG. 10 shows a schematic diagram of flight control according to control handover. The method can be performed by the processor 156 executing software instructions, but for convenience of description, the processor 156 and the air mobility apparatus 100 are described in combination.

Referring to S105, the processor 156 of the air mobility apparatus 100 may control the actuator 152 based on the automatic piloting mode according to a request of a pilot.

For example, the processor 156 may generate mission information according to flight path, surrounding environment, flight mode, and flight state data in the automatic pilot mode. The generation of the mission information may be performed by a mission control function according to activation of the automatic pilot mode as shown in FIG. 10.

The surrounding environment may be, for example, an obstacle, a weather condition, an illuminance, and the like. The surrounding environment may be identified based on, for example, data received from the sensor unit 132 and an external device. The flight mode may be, for example, a hovering mode such as takeoff and landing, a cruising mode, an emergency flight mode, and the like. The mission information may be generated to include a global/local path, a flight altitude, a flight time, and the like based on flight path, surrounding environment, flight mode, and flight state data.

The processor 156 may generate an automatic piloting parameter based on the mission information. For example, the generation of the automatic piloting parameter may be performed by a flight parameter control function, as shown in FIG. 10.

The automatic piloting parameter may include flight control data associated with the thrust, speed, and attitude applied to the actuator 152. Specifically, the automatic piloting parameters may include the thrust, speed, and attitude that are to be implemented by the control of the actuator 152. For example, the automatic piloting parameter may include the thrust of propulsors 108a to 108d and 110a to 110d, the speed of the air mobility apparatus 100, and the attitude of the fuselage 102, including yaw, pitch, and roll. The automatic piloting parameter may be obtained from, for example, the memory 154 or may be generated by a predetermined model.

In some implementations, the processor 156 may use the actuator control function shown in FIG. 10 to control the actuator 152 based on the autopilot parameter.

In addition, the processor 156 may control the mobility control operation device 136 to implement automatic movement of the mobility control operation device 136 corresponding to the automatic piloting parameter during flight in the automatic piloting mode. As such, the mobility control operation device 136 can be controlled to perform movements, even without manipulation by a user, that reflect the automatic piloting mode. In some implementations, the automatic movement of the mobility control operation device 136 may be performed by a position control function of the operation device, as shown in FIG. 10.

For example, when the mobility control operation device 136 includes the inceptor 160 as shown in FIG. 8, the processor 156 may transmit an automatic piloting parameter to the operation device controller 166 to implement movement of the mobility control operation device 136 corresponding to the automatic piloting parameter. The operation device controller 166 may generate position data for movement of the mobility control operation device 136, based on the automatic piloting parameter received from the processor 156. The position data of the inceptor 160 may include a position associated with each of the axial directions illustrated in FIG. 8, specifically, the longitudinal direction, the lateral direction, and the axial direction. The operation device driver 168 may automatically move the inceptor 160 based on the position data.

Referring to S110, the processor 156 may activate the manual piloting mode based on an input of a pilot. For example the processor 156 may deactivate the automatic piloting mode and activate the manual piloting mode through an input using the switch 172 of the pilot.

Having activated manual piloting mode, the processor 156 may receive the pilot's piloting input through the mobility control operation device 136 to generate a manual piloting parameter. For example, the generation of the manual piloting parameter may be performed by a flight parameter control function, as shown in FIG. 10. In some implementations, when the manual piloting mode is activated, the processor 156 may deactivate the mission control function. As such, the processor 156 may use the flight parameter control function to generate the manual piloting parameter based on the piloting input rather than mission information. The manual piloting parameter may include flight control data related to the thrust, speed, and attitude applied to the actuator 152.

The manual piloting parameter may be generated in various ways according to the control mode of the piloting input. The control mode may be, for example, a position control mode, an altitude control mode, a stability and control augmentation system (SCAS) mode, a manual mode, or the like. The position control mode may adjust the attitude and the thrust so that the air mobility apparatus 100 moves to a target position or holds at a specific position. The altitude control mode may pilot the attitude and the thrust to maintain a specific altitude or raise/lower to a target altitude. The SCAS mode may add attitude correction control to improve flight stability and maneuverability while reflecting an input of a pilot. The manual mode may control the attitude and the thrust according to a direction and a magnitude intended by a pilot without flight stability or an assistance function.

In some implementations, when the manual piloting mode is activated, the processor 156 may start a timer for a transition period to transition from the automatic piloting mode to the manual piloting mode. During this transition period, the processor 156 may control the actuator 152 according to a combination of the automatic piloting parameter and the manual piloting parameter. When this transition period ends, the processor 156 can perform flight control depending only on the manual piloting mode. The transition period, for example, may be set according to a design specification.

In addition, the processor 156 may release the automatic movement of the mobility control operation device 136 during the transition period based on the activation of the manual piloting mode. As such, after the transition period ends, the mobility control operation device 136 performs movements according to manual control of a user. Accordingly, the position control function of the mobility control operation device 136 shown in FIG. 10 may be deactivated. The position control function of the mobility control operation device 136 may be activated when the automatic piloting mode is resumed.

Next, further details are provided for controlling the actuator 152 during the transition period. As described below in S115 through S125, during the transition period, the actuator 152 can be controlled according to a combination, or blend, of the automatic piloting parameter and the manual piloting parameter.

Referring to S115, the processor 156 may identify an automatic piloting parameter and a manual piloting parameter, in order to implement a combination blend thereof. For example, the processor 156 may identify the automatic piloting parameter as a last (or final) automatic piloting parameter identified when the automatic piloting mode was deactivated, that is, when the automatic piloting mode ends. The processor 156 may identify the manual piloting parameter as a first (or initial) manual piloting parameter identified when the manual piloting mode was activated. However, implementations are not limited thereto, and other instances of an automatic piloting parameter and a manual piloting parameter can be identified to perform the combination blend. These identifications, for example, may be performed by the flight parameter control function, as shown in FIG. 10.

Referring to S120, the processor 156 may generate a blend parameter based on the automatic piloting parameter of the automatic piloting mode and the manual piloting parameter identified in S115, according to a piloting input of a pilot during the transition period. For example, the generation of the blend parameter may be performed by the flight parameter control function, as shown in FIG. 10.

In some implementations, the processor 156 may generate the blend parameter to gradually decrease the influence of the automatic piloting parameter and gradually increase the influence of the manual piloting parameter as time passes during the transition period. Accordingly, when switching from automatic piloting mode to manual piloting mode, the flight parameter (or flight control data) applied to the actuator 152 may be gradually changed during the transition period. This can help reduce or avoid problems of abrupt maneuvers that can occur when switching from automatic piloting mode to manual piloting mode, due to a sudden difference between the automatic piloting parameter and the manual piloting parameter.

To implement a gradual change of flight parameter during the transition period, the processor 156 may be configured to generate a blend parameter based on a gradually shifting weighting function between the last automatic piloting parameter and the first manual piloting parameter. For example, the processor 156 may generate a blend parameter by applying a first weight to the automatic piloting parameter and applying a second weight to the manual piloting parameter. As time progresses through the transition period, the first weight is gradually reduced and the second weight is gradually increased, thus biasing more to the manual piloting mode. More generally, other types of linear or non-linear weighting functions can be used that gradually shift weight from the automatic piloting parameter to the manual piloting parameter. A specific example of a time-varying first weight and time-varying second weight are shown in Equation 1 below. Here, the sum of the automatic weight and the manual weight may have a constant value during the transition period. $g \left(t, x\right) = \left(1-\frac{t}{n}\right) {f}_{Auto} \left(x\right) + \frac{t}{n} {f}_{manual} \left(x\right)$ Equation 1 where g(x) is a blend parameter, *f_{Auto}*(x) is an automatic piloting parameter, *fₘₐₙᵤₐₗ*(x) is a manual piloting parameter, n is the duration of a transition period, and t is elapsed time of control handover.

Referring to S125, the processor 156 may control the actuator 152 based on the blend parameter during the transition period using the actuator control function shown in FIG. 10. For example, the processor 156 may generate an operation instruction or an operation signal including a motor rotation speed of the propulsors 108a to 108d and 110a to 110d, a torque required of the motor, and a motion amount of a control surface (e.g., a flap) based on the thrust, speed, and attitude included in the blend parameter. The actuator 152 may be driven according to the operation instruction.

Referring to S130, the processor 156 may generate a manual piloting parameter according to a piloting input of a pilot in real time while finally entering the manual piloting mode based on the lapse of the transition period. Referring to S135, the processor 156 may control the actuator 152 based on the manual piloting parameter. Detailed descriptions related to the generation of the manual piloting parameter and the control of the actuator 152 in S130 and S135 may be substantially the same as those described above. In addition, the manual flight control according to the piloting input may be performed according to a control option mode. The control option mode may include a speed control mode, an altitude control mode, a position control mode, a force control mode in which an input control amount is interpreted as a target value of force, a flight direction control mode, and the like.

According to implementations of the present disclosure, it is possible to provide a mobility apparatus that stably implements switching from automatic piloting to manual piloting to ensure flight safety and a flight control method.

Effects that can be obtained in the present disclosure are not limited to the above-mentioned effects, and other effects that are not mentioned will be clearly understood by those skilled in the art from the following description.

While the example methods of the present disclosure described above are represented as a series of operations for clarity of description, it is not intended to limit the order in which the steps are performed, and the steps may be performed simultaneously or in different order as appropriate. In order to implement the method according to the present disclosure, the described steps may further include other steps, may include remaining steps except for some of the steps, or may include other additional steps except for some of the steps.

The various implementations of the present disclosure are not a list of all possible combinations and are intended to describe representative aspects of the present disclosure, and the matters described in the various implementations may be applied independently or in combination of two or more.

In addition, various implementations of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various implementations to be executed on an apparatus or a computer, a non-transitory computer-readable medium having such software or commands stored thereon and executable on the apparatus or the computer.

## Claims

1. A mobility apparatus comprising:
a fuselage;
at least one propulsor coupled to the fuselage;
an actuator coupled with the fuselage and configured to control the at least one propulsor based on a flight parameter;
at least one processor; and
at least one computer-readable memory storing at least one instruction that, based on being executed by the at least one processor, perform operations comprising:
controlling the actuator according to an automatic piloting mode;
activating a manual piloting mode based on an input of a pilot during flight of the mobility apparatus according to the automatic piloting mode;
during a transition period between the automatic piloting mode and the manual piloting mode, generating a blend parameter based on (i) an automatic piloting parameter of the automatic piloting mode and (ii) a manual piloting parameter according to a piloting input of the pilot; and
controlling the actuator based on the blend parameter during the transition period.

2. The mobility apparatus of claim 1, wherein the operations comprise:
generating the blend parameter to (i) gradually decrease an influence of the automatic piloting parameter on the blend parameter during the transition period and (ii) gradually increase an influence of the manual piloting parameter on the blend parameter during the transition period.

3. The mobility apparatus of claim 1 or 2, wherein the operations comprise:
deactivating the automatic piloting mode according to the activating of the manual piloting mode; and
generating the blend parameter based on (i) a last automatic piloting parameter identified upon the deactivating of the automatic piloting mode and (ii) an initial manual piloting parameter identified upon the activating of the manual piloting mode.

4. The mobility apparatus of claim 3, wherein the operations comprise:
generating the blend parameter by (i) gradually decreasing a first weight value applied to the last automatic piloting parameter during the transition period, and (ii) gradually increasing a second weight value applied to the initial manual piloting parameter during the transition period.

5. The mobility apparatus of claim 4, wherein a sum of the first weight value and the second weight value has a constant value during the transition period.

6. The mobility apparatus of anyone of claims 1-5, wherein the automatic piloting parameter includes flight control data associated with a thrust and an attitude applied to the actuator.

7. The mobility apparatus of anyone of claims 1-6, wherein the operations comprise:
generating the automatic piloting parameter based on mission information according to flight path, surrounding environment, and flight mode in the automatic piloting mode; and
controlling the actuator based on the automatic piloting parameter during the automatic piloting mode.

8. The mobility apparatus of anyone of claims 1-7,
wherein the mobility apparatus comprises a mobility control operation device configured to receive the piloting input of the pilot and configured to switch between the automatic piloting mode and the manual piloting mode, and
wherein the operations comprise:
during the automatic piloting mode, controlling automatic movement of the mobility control operation device,
wherein the automatic movement of the mobility control operation device is controlled based on generating position data of the mobility control operation device corresponding to the automatic piloting parameter during the flight according to the automatic piloting mode.

9. The mobility apparatus of claim 8, wherein the operations comprise:
releasing the controlling of the automatic movement of the mobility control operation device during the transition period, based on the activating of the manual piloting mode.

10. The mobility apparatus of anyone of claims 1-9, wherein the operations comprise:
based on elapse of the transition period, controlling the actuator based on the manual piloting parameter according to the piloting input of the pilot, without influence from the automatic piloting parameter.

11. A flight control method for a mobility apparatus comprising a fuselage, at least one propulsor, and an actuator configured to control the at least one propulsor, the flight control method comprising:
controlling the actuator according to an automatic piloting mode;
activating a manual piloting mode based on an input of a pilot during flight of the mobility apparatus according to the automatic piloting mode;
during a transition period between the automatic piloting mode and the manual piloting mode, generating a blend parameter based on (i) an automatic piloting parameter of the automatic piloting mode and (ii) a manual piloting parameter according to a piloting input of the pilot; and
controlling the actuator based on the blend parameter during the transition period.

12. The flight control method of claim 11, comprising:
generating the blend parameter to (i) gradually decrease an influence of the automatic piloting parameter on the blend parameter during the transition period and (ii) gradually increase an influence of the manual piloting parameter on the blending parameter during the transition period.

13. The flight control method of claim 11 or 12, comprising:
deactivating the automatic piloting mode according to the activating of the manual piloting mode; and
generating the blend parameter based on (i) a last automatic piloting parameter identified upon the deactivating of the automatic piloting mode and (ii) an initial manual piloting parameter identified upon the activating of the manual piloting mode.

14. The flight control method of claim 13, comprising:
generating the blend parameter by (i) gradually decreasing a first weight value applied to the last automatic piloting parameter during the transition period, and (ii) gradually increasing a second weight value applied to the initial manual piloting parameter during the transition period.

15. The flight control method of claim 14, wherein a sum of the first weight value and the second weight value has a constant value during the transition period.
